Europäisches Patentamt

European Patent Office

Office européen des brevets

(19)

(11) Publication number: **0 310 458**
**A2**

(12) **EUROPEAN PATENT APPLICATION**

(21) Application number: 88309699.2

(22) Date of filing: 17.10.88

(51) Int. Cl.⁴: **E 04 F 21/00**
**B 66 C 1/24**

(43) Date of publication of application:
05.04.89 Bulletin 89/14

(84) Designated Contracting States:
AT BE CH DE ES FR GR IT LI LU NL SE

(71) Applicant: **ASPINALL DEVELOPMENTS LIMITED**
**Middleton Business Park Heysham**
**Morecambe Lancashire LA3 3PW (GB)**

(72) Inventor: **Harrison, Alan Malcolm**
**50 Kirkbarrow**
**Kendal Cumbria LA9 5DE (GB)**

(74) Representative: **Cardwell, Stuart Martin et al**
**Roystons Tower Building Water Street**
**Liverpool, Merseyside L3 1BA (GB)**

Pursuant to Rule 85(2)(3) EPC the priority of GB8722504 - 24/09/1987 has been validly claimed. Pursuant to Rule 85(2) and (3) EPC the priority 24.09.87 GB 8722504 has been validly claimed.

(54) **Fitting windows.**

(57) A lifting frame is proposed which is readily adaptable to lift different sizes of glazed or unglazed frames or the like and comprises upper and lower abutment means (pivotal guide arms 3, 5 and wheel 7) for engagement with a lifting harness 9 at spaced locations, and load coupling means in the form of suckers or other clamping means. More particularly the abutment means are carried on a frame 13 and the load coupling means are carried on respective arms 51 adjustably mounted from the frame to adapt the frame for lifting various sizes of frame.

## Description

## Fitting Windows

The present invention relates in particular to window fitting and especially to a lifting frame for use in fitting windows.

In my earlier published patent application no. WO 88/01670 there is described a method and apparatus of fitting windows in which a lifting harness in the form of a loop of wire engages with spaced abutments of lifting frame means. In one particular embodiment the spaced abutments are on respective carriers which are arranged for fixing to a preglazed window frame by suckers.

There is also a requirement for lifting unglazed window frames and the present invention aims to meet that requirement and also to provide an improved lifting frame for glazed frames and/or the glazing or other panel and which also accommodates lifting small and large window frames.

According to the present invention then there is provided a lifting frame for a load such as a window or door frame and/or glazing or other panelling, comprising upper and lower abutment means for engagement with a lifting harness at spaced locations, and load coupling means adapted to secure said upper and lower abutment means relative to said load.

The upper and lower abutment means may be separate from one another, each with its own load coupling means, but more preferably we provide a frame carrying both the upper and lower abutment means. We prefer to have the lower abutment means in the form of a pulley or wheel journalled for rotation in the frame and around which the lifting harness is looped so as preferably to maintain a window or frame substantially vertical for presentation to a window opening. We prefer to have the upper abutment means as a pair of guide arms, each of which is twisted at the end to engage with a respective run of the looped lifting harness. Especially convenient is to have two guide arms pivotally mounted to enable the ends to be pivoted towards and away from one another and to provide a latch to hold the guide arms in at least one end position in which the upper and lower abutments are in substantially the same plane.

The load coupling means may simply comprise sucker means of or associated with any one or all of the abutment means, but advantageously we prefer to provide a load arm of or associated with each abutment means. More especially we find it convenient to have these arms mounted for movement on a frame carrying the upper and lower abutment means when these are on the same frame, or on separate frames for the upper and lower abutments. Especially convenient is to have the arms mounted for arcuate movement in a plane generally parallel to the plane of the load and preferably each provided with adjustable fixing parts for the load coupling means. Arcuate movement through 90 degrees is particularly advantageous to accommodate wide and narrow windows.

The load coupling means may comprise a respective sucker for each arm which is a particularly convenient way of fixing the frame to a glazed unit for lifting. Alternatively, load coupling means may comprise a clamp for attaching to frame parts of the window/door being lifted - this is particularly useful for lifting unglazed units, with the movement of the arms allowing for mating with horizontal or vertical frame parts.

Especially, convenient is to have three load coupling locations, say two positioned towards the upper abutment means and one positioned towards the lower abutment means with each having its own load arm. The two upper load arms are conveniently provided with means for locking them in a desired position, although we find that the lower arm can swing free.

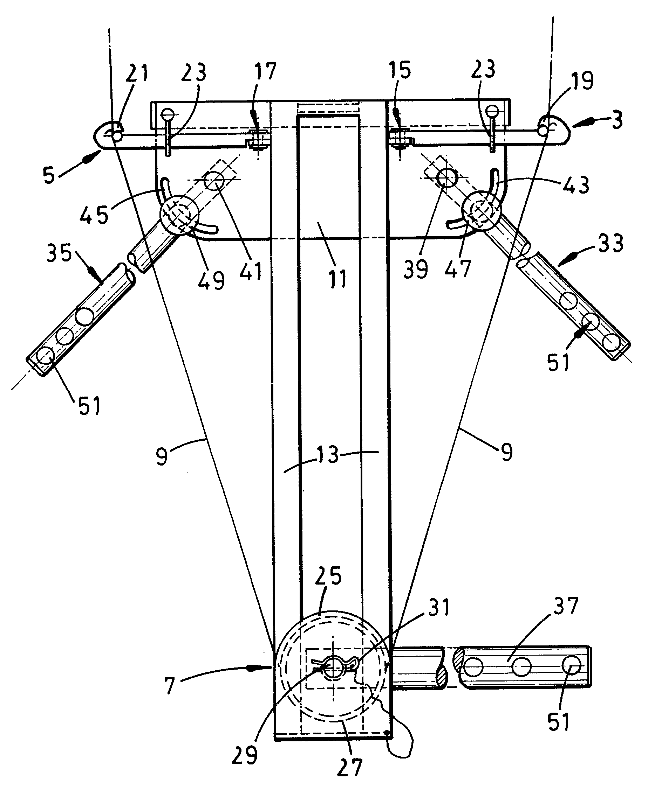

The present invention will now be described further by way of example only, with reference to the accompanying drawing which is a front elevation of a lifting frame according to the invention.

Referring to the drawing, a lifting frame is illustrated with upper 3, 5 and lower 7 abutments for cooperation with a looped wire lifting line 9 of a lifting harness (not further illustrated). As illustrated the upper and lower abutments are carried by a frame having a transverse back plate 11 from which extend downwardly two vertical members 13 which take the lifting load in compression. The upper abutments 3, 5 each comprise a guide arm pivotally mounted on the back plate at 15, 17 respectively and the wire engaging end of the guide arms are formed as split circle wire retaining hooks 19, 21. A gate type latch release 23, is provided for each guide arm to locate them for final fitting.

The lower abutment 7 is in the form of a pulley 25 grooved at 27 to receive the lifting line 9. The pulley is accommodated in a housing between front and rear plates and journalled for rotation about an axle 29 located by means of split pin 31.

Also illustrated are three load arms 33, 35 and 37 each of which is journalled for arcuate movement about a respective pivot axis 39, 41, 29, with arms 33, 35 pivotally mounted to the rear face of the back plate 11. Arcuate slots 43, 45 are cut in the back plate in which a clamp pin 47, 49 of each arm passes for engaging with the arm and the front face of the back plate 11 to clamp the arms in any desired position. The plane of swinging of the arms corresponds generally with the plane of the load to be carried by the frame. Especially useful is to have a 90 degree arc to allow movement of the arms from the horizontal to vertical. We prefer the lower arm 37 to be freely pivotable about the axle 29.

Each of the arms 33, 35, 37 is provided with mounting holes 51, three each in the illustrated embodiment, by which the lifting frame can be secured to the load to be lifted. A particularly convenient arrangement is to locate a suction type fixing device on each of the arms, say locatable in the holes 51 or at least slidable on the arms with the holes providing adjustable fixing locations.

The holes 51 can also serve to receive clamping means for fixing the lifting frame to frame parts of the load to be lifted. Those may be in the form of brackets secured to the arm by bolts with the frame parts between the arm and the bracket.

The described lifting frame is particularly advantageous in that it provides the desired spaced upper and lower abutments and positions the load coupling means adjustably to suit the size of the frame being lifted. Alternative size of load arms may be provided to cater for particularly large or small windows, or at least extensions provided for smaller arms.

By providing at least one wheel journelled for rotation on a carrier and providing that carrier with a sucker for affixing to the window/frame, the frame can be easily manoeuvred into the desired position ready for lifting. We prefer to position two such wheels at spaced locations to project below the bottom edge of the load to facilitate movement thereof.

## Claims

1. A lifting frame for a load such as a window or door frame and/or glazing or other panelling, comprising upper and lower abutment means for engagement with a lifting harness at spaced locations, and load coupling means adapted to secure said upper and lower abutment means relative to said load.

2. A lifting frame as claimed in claim 1 in which the upper and lower abutment means are carried by a common frame.

3. A lifting frame as claimed in claim 2 in which the lower abutment means is in the form of a pulley or wheel journalled for rotation in the frame and around which the lifting harness is looped.

4. A lifting frame as claimed in claim 1, 2 or 3 in which upper abutment means comprises a pair of guide arms, each of which is twisted at the end to engage with a respective run of the looped lifting harness.

5. A lifting frame as claimed in claim 4 in which each of the two guide arms is pivotally mounted to enable the ends to be pivoted towards and away from one another, and in which a latch is provided to hold the guide arms in at least one end position in which the upper and lower abutments are in substantially the same plane.

6. A lifting frame as claimed in any preceding claim in which a load arm of or associated with each abutment means is provided and has a respective load coupling means associated therewith.

7. A lifting frame as claimed in claim 6 in which the load arms are adjustably mounted for movement on a frame carrying the upper and lower abutment means on a respective frame.

8. A lifting frame as claimed in claim 7 in which each arm is mounted for arcuate movement in a plane generally parallel to the plane of the load.

9. A lifting frame as claimed in claim 6, 7 or 8 in which each arm is provided with adjustable fixing parts for the load coupling means.

10. A lifting frame as claimed in any one of claims 6 to 9 in which the load coupling means comprises a respective sucker for each arm.

11. A lifting frame as claimed in any one of claims 6 to 9 in which the load coupling means comprises a respective mechanical clamp depending from each arm for attaching to frame parts of the window/door being lifted.

12. A lifting frame as claimed in any one of claims 6 to 11 in which three load coupling locations are provided, two positioned towards the upper abutment means and one positioned towards the lower abutment means with each having its own load arm.

13. A lifting frame as claimed in claim 12 in which at least the two upper load arms are provided with means for locking them in a desired position.